**Europäisches Patentamt**

**European Patent Office**

**Office européen des brevets**

(19)

(11) Veröffentlichungsnummer: **0 224 678**
**B1**

(12) # EUROPÄISCHE PATENTSCHRIFT

(45) Veröffentlichungstag der Patentschrift:
**11.01.89**

(21) Anmeldenummer: **86113728.9**

(22) Anmeldetag: **03.10.86**

(51) Int. Cl.⁴: **B65B 35/36**, B65B 5/06,
B65G 57/18

(54) **Verfahren und Vorrichtung zum lagenweisen Versetzen von gleichgrossen Stangen.**

(30) Priorität: **27.11.85 DE 3541900**

(43) Veröffentlichungstag der Anmeldung:
**10.06.87 Patentblatt 87/24**

(45) Bekanntmachung des Hinweises auf die Patenterteilung:
**11.01.89 Patentblatt 89/2**

(84) Benannte Vertragsstaaten:
**AT BE CH DE ES FR GB IT LI NL**

(56) Entgegenhaltungen:
**EP-A- 0 167 138**
**DE-A- 2 751 953**
**DE-B- 1 159 608**

(73) Patentinhaber: **Lauermann, Walter, Dr. Schier-Strasse 9,**
**D-6990 Bad Mergentheim(DE)**

(72) Erfinder: **Lauermann, Walter, Dr. Schier-Strasse 9,**
**D-6990 Bad Mergentheim(DE)**

(74) Vertreter: **Hach, Hans Karl, Dr., Tarunstrasse 23,**
**D-6950 Mosbach-Waldstadt(DE)**

**Beschreibung**

Die Erfindung betrifft ein Verfahren zum lagenweisen Versetzen von gleichgroßen Stangen, die kreiszylindrische Außenkontur haben, wobei mehrere Stangen achsparallel nebeneinander aufgereiht eine Lage bilden, welche durch einen Greifer erfaßt wird, und eine Vorrichtung zur Ausübung dieses Verfahrens.

Eine derartige Vorrichtung ist bekannt aus DE-B 1 159 608.

Man kann Lagen, abgelegt auf einer Stapelgabel oder, wenn die Stangen leicht sind, auch von Hand versetzen. In vielen Fällen steht aber nur wenig Platz zur Verfügung, um die Lage zu ergreifen und/oder die versetzte Lage abzusetzen.

Aufgabe der Erfindung ist es, ein Verfahren und eine Vorrichtung der eingangs genannten Art so auszugestalten, daß in Verlängerung der größten Ausdehnung der Lage möglichst wenig Platz benötigt wird.

Die gestellte Aufgabe wird nach dem eingangs genannten Verfahren dadurch gelöst, daß eine Lage aufgewölbt an den äußeren Stangen erfaßt wird, wobei alle zwischen den beiden äußeren Stangen der Lage gelegenen Stangen auf der vorspringenden Vorderseite der Lage in Richtung des Stangenradius gegen weiteres Vorwölben abgestützt sind, und wobei die beiden äußeren Stangen in Richtung des Stangenradius gegeneinandergedrückt werden, so daß alle Stangen der Lage in Berührungskontakt miteinander stehen und sich dadurch gegenseitig stützen, wobei durch die Aufwölbung die innen gelegenen Stangen, gegenüber den jeweils benachbarten, außen angrenzend liegenden Stangen um 10 bis 90% (Prozent) des Stangenradius aus der Ebene einer ungewölbten Lage achsparallel nach vorn verschoben sind.

Die gestellte Aufgabe wird bei einer Vorrichtung zum lagenweisen Versetzen von gleichgroßen Stangen, die kreiszylindrische Außenkontur haben, wobei mehrere Stangen achsparallel nebeneinander aufgereiht eine Lage bilden, mit einem Greifer zum lagenweisen Erfassen der Stangen, dadurch gelöst, daß der Greifer einen Greifbügel aufweist, der der vorspringenden Vorderseitenkontur einer aufgewölbten Lage tantential angeformt ist und mit seinen beiden Enden etwas über die den jeweiligen beiden nächstgelegenen Stangen gemeinsame Mittelebene hinaus die beiden äußeren Stangen formschlüssig umgibt, und wobei bei einer aufgewölbten Lage die innen gelegenen Stangen über den jeweils benachbarten, außen angrenzend liegenden Stangen um 10 bis 90% des Stangenradius aus der Ebene einer ungewölbten, achsparallelen Lage nach vorn verschoben sind.

Durch die Aufwölbung stützen sich die Stangen, wenn sie vom Greifer gehalten werden, gegenseitig an den jeweils außen gelegenen Stangen ab, die sich ihrerseits an den Enden des Greifbügels abstützen.

Durch die Aufwölbung wird die Lage auch insgesamt schmaler und kann unter engen Platzverhältnissen dadurch bequemer in die Ablageposition gebracht oder aus ihr herausgeführt werden. Die Aufwölbung bietet außerdem dem Greifer die Möglichkeit, die gesamte Lage, allein durch Zugriff von oben und von den Seiten, zu erfassen, so daß die andere Seite frei bleibt. An den beiden Seiten, an denen die Unterstützung der beiden außen gelegenen Stangen erfolgt, wird nur minimaler Platz benötigt. An den beiden anderen Seiten entlang der Stirnseiten der Stangen wird für den Greifer kein zusätzlicher Platz benötigt.

Man kann die Stangen einer Lage in den Greifer einsetzen, so daß sich dort die Stangen zu einer aufgewölbten Lage formieren. Dann dient der Greifer gleichzeitig als Unterlage für die Bildung der Lage und man spart sich eine entsprechende Unterlage. Eine entsprechende Ausgestaltung ist Gegenstand des Anspruchs 5. Man kann eine Lage aber auch aufgewölbt bereitlegen und dann in aufgewölbtem Zustand von dem Greifer erfassen. Das ist unter Umständen durch einen hohen Arbeitstakt vorteilhaft. Eine dementsprechende Ausgestaltung ist Gegenstand des Anspruchs 6.

Der Greifer kann auch vorteilhaft eingesetzt werden, wenn in Längsrichtung der Stangen ein Behälter für die Lage nur geringe Toleranz bietet. In einem solchen Fall empfiehlt es sich, den Greifer schräg in dem Behälter zu führen, und zwar so, daß ein spitzer Winkel besteht zwischen der Längsachse der Stangen und der Ebene der im Behälter abgelegten Lage.

Vorzugsweise umfaßt eine Lage vier Stangen, es können aber auch mehr Stangen in einer Lage zusammengefaßt und gemeinsam vom Greifbügel erfaßt werden, wenn nur die Aufwölbung entsprechend gewählt ist, so daß sich die aufgewölbten Stangen gegenseitig abstützen.

Die Erfindung ist vorzugsweise anwendbar bei Stangen, die aus ineinandergesteckten, gleichartigen Kunststoffbehältern bestehen. Diese Kunststoffbehälter fallen stangenweise an und müssen dann verpackt werden und sollen bei der Handhabung zum Verpacken nicht allzu stark gedrückt werden. Das ist mit dem Greifer möglich.

Bei der Handhabung von Stangen aus ineinandergestapelten Kunststoffbechern, die sich zum Boden hin konisch verjüngen und an ihrer Öffnung von einem kragenförmig nach außen vorspringenden Rand umgeben sind, empfiehlt es sich, am Greifer für den Rand des jeweils untersten Bechers einer jeden Stange eine Stützschiene vorzusehen.

Kunststoffbehälter werden auch auf Vorrat produziert und zu diesem Zweck in Behältern abgelegt. Aus diesen Behältern müssen sie dann unter Umständen bei Bedarf wieder umgepackt werden. Dann ergibt sich die Notwendigkeit, die Stangen lagenweise aus den Behältern herauszunehmen. Dazu ist der Greifer ebenfalls anwendbar, und zwar mit entsprechenden Vorzügen wie beim Einfüllen der Stangen in einen Behälter.

Die Erfindung ist aber auch anwendbar auf andere Stangen, und zwar vorteilhaft auf solche, die leicht sind und schonend behandelt werden sollen.

Man kann das Einfüllen und Herausnehmen der Stangenlagen mit dem Greifer von Hand vornehmen, indem man den Greifer von Hand bewegt. Dann werden mit einem Handgriff die Stangen lagenweise, statt wie bisher einzeln gehandhabt.

Zum Aufnehmen der Lagen kann der Greifer elastisch ausgebildet sein, so daß er elastisch über die zu ergreifende Lage gestülpt werden kann, er kann aber auch mit gegeneinander verschieblichen Enden ausgebildet sein, die man dann zum Aufnehmen einer Lage und auch zum Ausstoßen einer Lage kurzzeitig auseinanderstellt. Beim elastischen Greifer kann man auf das Verstellen der beiden Enden verzichten und die Lage ausstoßen, indem man eine der mittleren Stangen von der Rückseite her anstößt, so daß sie den Verband verläßt und herausfällt, woraufhin dann die anderen Stangen ihren Halt sofort verlieren und auch abfallen.

Wenn man das dicht über der gewünschten Lagenposition macht, fallen die Stangen dabei in die gewünschte Lagenposition.

Man kann den Greifer, statt ihn von Hand zu betätigen, auch in eine Handhabungsvorrichtung zum Befüllen und Entleeren von Behältern integrieren.

Die Erfindung wird nun anhand der beigefügten Zeichnung näher erläutert.

In der Zeichnung zeigt:

Figur 1 einen Kunststoffbehälter,

Figur 2 eine Stange aus gestapelten Kunststoffbehältern, die ausgeführt sind wie der Behälter nach Figur 1,

Figur 3 einen Greifer zur Handhabung von Lagen aus jeweils vier Stangen nach Figur 2,

Figur 4 den Schnitt IV aus Figur 3,

Figur 5 in der Ansicht entsprechend Figur 3 den Greifbügel des Greifers aus Figur 3 kurz vor dem Ansetzen an eine aufgewölbt bereitliegende Lage,

Figur 6 die Teile aus Figur 5 nachdem die Lage ergriffen wurde,

Figur 7 einen Greifer beim Entleeren eines Behälters kurz vor dem Ergreifen einer aufgewölbten Lage,

Figur 8 in der Ansicht gemäß dem Pfeil VIII aus Figur 7 den Greifer mit der ergriffenen Lage während er nach oben aus dem Behälter herausgezogen wird,

Figur 9 eine Handhabungsvorrichtung zum Beladen von Behältern mit Stangen nach Figur 2, und

Figur 10 die Ansicht gemäß dem Pfeil X aus Fig. 9.

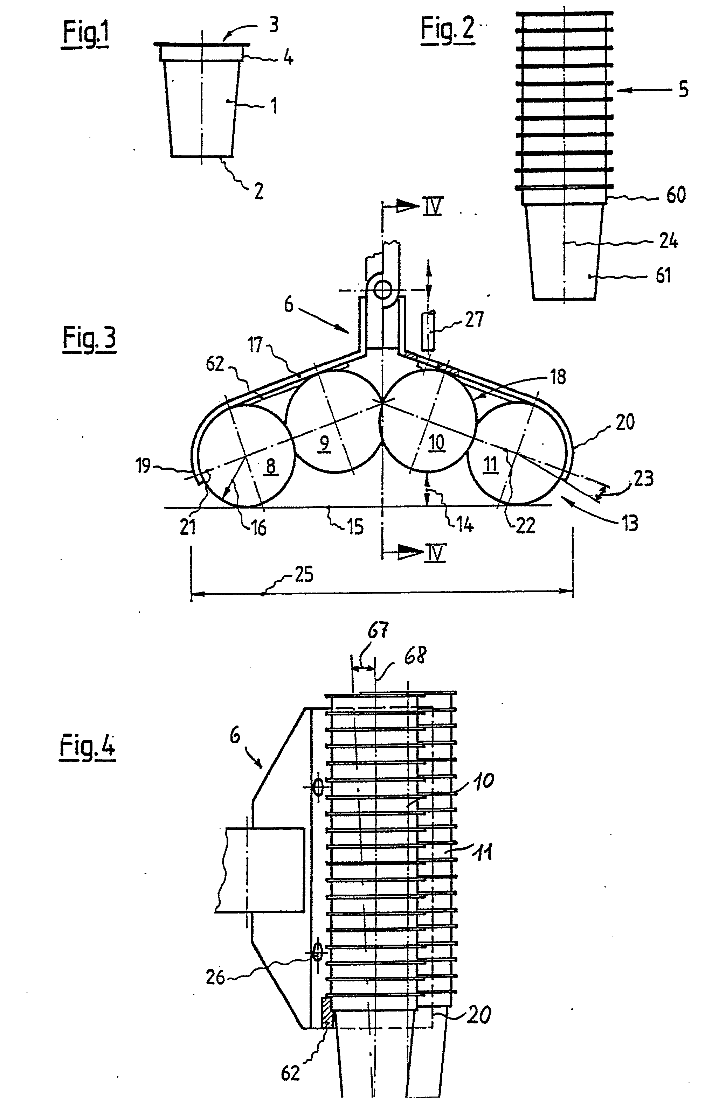

Figur 1 zeigt einen Kunststoffbecher 1, der sich zum Boden 2 konisch verjüngt und an seiner Öffnung 3 von einem kragenförmig nach außen vorspringenden Rand 4 umgeben ist. Solche Becher sind gemäß Figur 2 zu einer Stange 5 zusammengesteckt.

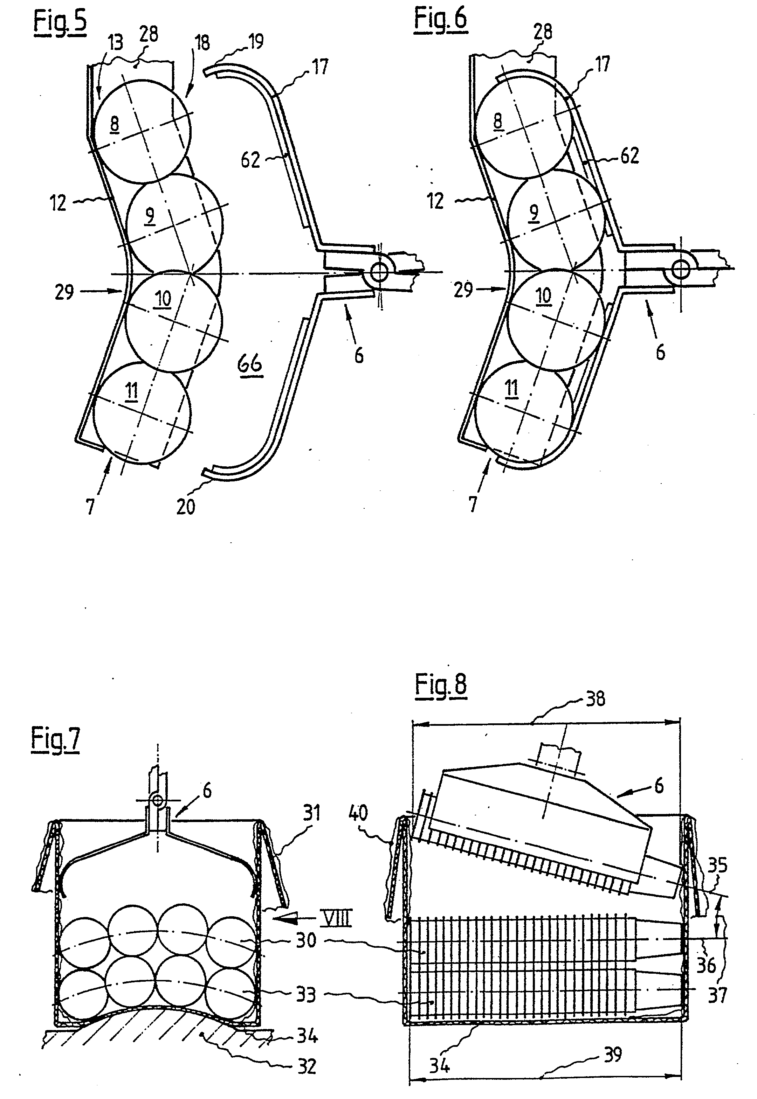

Figur 3 zeigt einen Greifer 6, der dazu dient, eine Lage 7 aus vier gleich langen Stangen 8, 9, 10, 11 der Art, wie sie in Figur 2 dargestellt ist, zu erfassen. Dazu wird die Lage 7 durch einen Aufwölber 12 eines Lagenbildners 29, vergleiche Figur 5 und 6, aufgewölbt. Der Aufwölber ist eine flache, gegen die Lage vorgewölbte Platte, wobei die Wölbungsachsen sich parallel zu den Stangenachsen 24 erstrecken. Zu diesem Zweck wird der Aufwölber 12 von der Rückseite 13 auf die Lage 7 zur Einwirkung gebracht, wodurch die innen gelegenen Stangen 9 und 10 gegenüber den benachbarten, außen angrenzend liegenden Stangen um einen Hub gemäß Doppelpfeil 14 aus der Ebene 15 der ungewölbten Lage 7 achsparallel nach vorn verschoben werden.

In Figur 5 und 6 sind die Stangen 8 bis 11 stehend dargestellt, und zwar mit ihrer Stangenachse im spitzen Winkel geneigt zur Vertikalen, so daß sie sich gegen den entsprechend geneigten Aufwölber 12 anlehnen. Die Stangen stehen auf einer Standleiste 28, die am unteren Rand des Aufwölbers befestigt ist.

Nach Figur 3 besteht die Lage 7 aus insgesamt vier Stangen, so daß nur die beiden Stangen 9 und 10 vorn verschoben werden zur Aufwölbung. Es sind auch Lagen von drei, fünf und mehr Stangen möglich. Der Hub gemäß Doppelpfeil 14 beträgt etwa 60% des Radius 16 einer Stange. Der Hub ist so groß gewählt, daß die in der Mitte gelegenen Stangen – hier also die Stangen 9 und 10 – sich auf den äußeren Stangen 8 und 11 gegen die Schwerkraft abstützen können, wenn der Greifer, wie in Figur 3 dargestellt, mit der Lage nach unten gehalten wird.

Der Greifer 6 weist einen Greifbügel 17 auf, der der auf der Vorderseite 18 gelegenen Kontur der aufgewölbten Lage 7 tangential angeformt ist und mit seinen beiden Enden 19, 20 etwas über die den jeweiligen beiden nächstgelegenen Stangen 8, 9 einerseits und 10, 11 andererseits gemeinsame Mittelebene 21, 22 hinaus die beiden äußeren Stangen 8, 11 formschlüssig umgibt. Das über die Mittelebene 22 hinausragende Stück ist in Figur 3 durch den Doppelpfeil 23 markiert.

Durch diese Ausbildung der Enden des Greifbügels werden in Verbindung mit der Aufwölbung der Lage sämtliche Stangen der Lage bei freier Rückseite der Lage gehalten. Bemerkenswert ist, daß die so gehaltene Lage mitsamt dem Greifer, also quer zur Längsachse 24 der Stangen, gemäß Pfeil 25 schmaler ist als die frei auf einer Ebene abgelegte Lage. Die verengte Breite gemäß Pfeil 25 bietet erwünschte Toleranz zum Einführen und Herausnehmen einer Lage aus einem eng den Abmessungen der Lagen angepaßten Behälter.

Der Greifbügel 17 besteht aus elastischem Material und kann gegen die Rückstellkraft seiner Elastizität, wie in Figur 5 und 6 angedeutet, über die aufgewölbt bereitgelegte Lage 7 gestülpt werden und faßt diese dann aufgrund seiner Elastizität.

Damit die Stangen 8 bis 11, wenn sie mit vertikaler Stangenachse im Greifer gehalten werden, nicht abrutschen, ist an der den Stangen zugekehrten Seite des Greifbügels 17 für den Rand 60 des jeweils untersten Bechers 61 einer jeden Stange 8, 9, 10, 11 eine vorspringende Stützschiene 62 angebracht.

Zum Abstoßen der Lage wird der Greifer 6 in die in Figur 3 gezeichnete Stellung gebracht, in der die ergriffene Lage nach unten weist. Durch einen Durchbruch 26 – vergleiche Figur 4 – im Greifbügel 17 kann mit einem Dorn 27 oder dem Finger der Bedienungsperson die Stange 10 nach unten gestoßen werden, so daß sie unter Überwindung der Elastizität der Stangen und des Greifbügels nach unten abfällt, wodurch sofort auch die anderen Stangen ihren gegenseitigen Halt verlieren und ebenfalls abfallen. Statt dessen kann zum Ausstoßen und zum Unterstützen beim Aufnehmen einer Lage der Greifer mit gegeneinander verschieblichen Enden 19, 20 ausgebildet sein, die dann etwas auseinanderverstellt werden, während der Greifer mit der abzuwerfenden Lage nach unten gehalten wird beziehungsweise beim Aufnehmen der Lage auf diese angesetzt ist.

Mit dem Greifer 6 kann auch die oberste Lage 30 aus einem Behälter 31 entnommen werden. In Frage stehende Behälter bestehen im allgemeinen aus Pappe oder aus anderem, flexiblem Material. Der Behälter 31 ist quaderförmig ausgebildet und umgibt eng, also mit geringer Toleranz, die eingesetzten Lagen 30, 33. Der Behälter 31 wird auf einen gewölbten Aufwölber 32 gesetzt, so daß sich der Behälterboden 34 und mit ihm die darüberliegenden Lagen 30, 33 nach oben wölben. Der Greifer erfaßt nun, wie im Text zu Figur 3 bis 6 beschrieben, die jeweils oberste Lage 30, die gewölbt bereitliegt. Die erfaßte Lage 30 kann nun nach oben mit dem Greifer aus dem Behälter herausgezogen werden. Dabei empfiehlt es sich, wenn die Toleranz in Achsrichtung der Stangen knapp ist, den Greifer 6 beim Herausheben aus dem Behälter schräg zu halten, und zwar so, daß zwischen der Längsachse 35 der Stangen und der Ebene 36 einer abgelegten Lage ein spitzer Winkel 37 besteht von etwa 5 bis 20°. Dadurch wird die Längserstreckung der Lage gemäß Doppelpfeil 38 kürzer als die Längserstreckung der abgelegten Lage 33 gemäß Doppelpfeil 39. Diese Verkürzung bietet eine erwünschte Toleranz beim Herausnehmen der Lage. Das ist besonders wichtig, wenn der Behälter 31 wie eingangs dargelegt mit einem Kunststoff-Foliensack 40 ausgekleidet ist. Entsprechend dem Winkel 37 schräg führt man auch bei beengten Platzverhältnissen einen Greifer in einen Behälter ein zum Einfüllen einer Lage in diesen Behälter.

Durch die Aufwölbung ist die im Greifer gehaltene Lage in Richtung quer zur Achse schmaler und durch die Schräglage gemäß Winkel 37 ist die Lage in der Projektion der Achsrichtung auf die Ablageebene 36 schmaler, so daß in diesen beiden Richtungen zusätzliches Spiel geschaffen wird gegenüber den Wänden des Behälters. Der Greifer 6 kann von Hand in der beschriebenen Weise gehandhabt werden.

Nach Figur 1 bis 6 wird eine Lage zunächst auf einem Aufwölber 12 gebildet oder aufgewölbt und erst dann in aufgewölbtem Zustand von dem Greifer ergriffen. Statt dessen kann man auch die Lage aus einzelnen Stangen unmittelbar im Greifer bilden. Dazu genügt es, den Greifer 6 mit der Greiferöffnung 66 nach oben weisend zu halten, damit die Lage in dem geöffneten Greifer auf der Stützschiene 62 und in Anlehnung an den Greifbügel Halt findet. Der Greifer kann zu diesem Zweck an der dem Beschauer von Figur 5 und 6 zugekehrten Seite nach oben abgestellt sein mit einer Neigung um einen kleinen spitzen Winkel 67 gegen die Vertikale 68, so daß die Stangen sich an den Greifbügel anlehnen. Der Greifer kann natürlich gegenüber der Vertikalen auch um einen größeren Winkel geneigt sein oder mit seiner Öffnung 66 senkrecht nach oben weisen, während er mit der zu bildenden Lage beschickt wird.

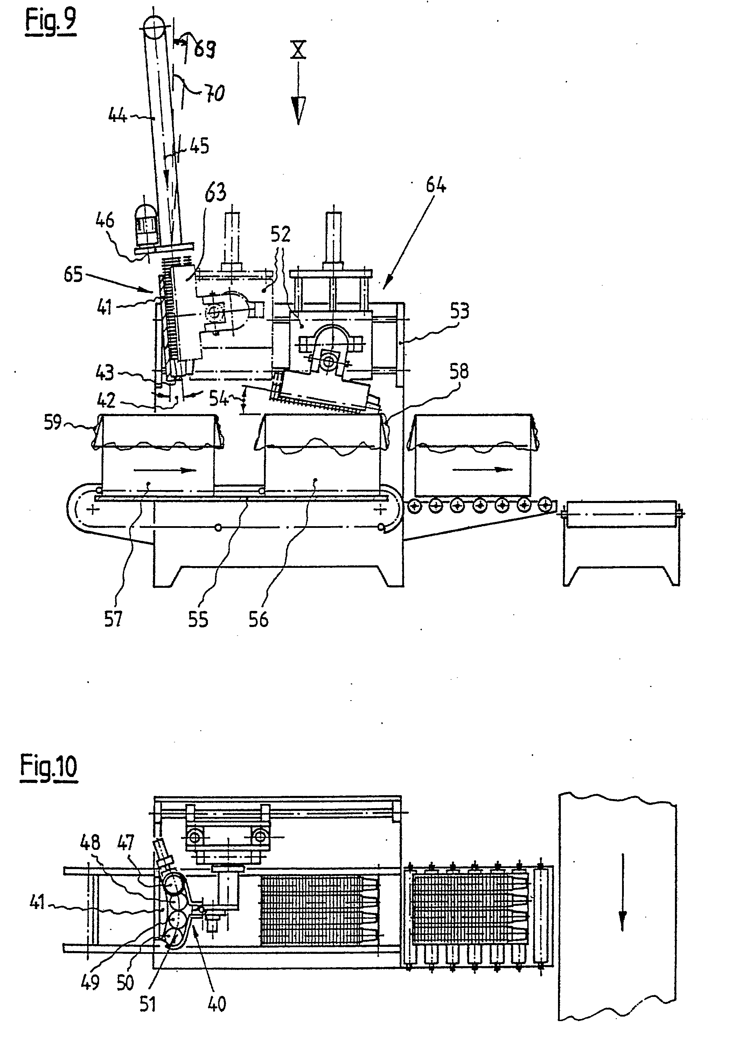

Anhand der Figuren 9 und 10 wird eine Handhabungsvorrichtung beschrieben, die mit einem Greifer 63 ausgestattet ist, der genauso ausgebildet ist und betrieben wird wie im Text zu den voraufgegangenen Figuren beschrieben.

An der Vorrichtung 64 ist ein Lagenbildner 65 mit einem dem Aufwölber 12 entsprechender Aufwölber 41 stationär montiert, so daß er im spitzen Winkel 42 gegen die Vertikale geneigt ist. Am unteren Rand des Aufwölbers 41 ist eine der Standleiste 28 entsprechende Standleiste 43 befestigt.

Der Aufwölber wird beschickt von einem Stangenzuführer 44, zum Beispiel aus einer Becherproduktionsmaschine. Die Becher werden einzeln hintereinander in Pfeilrichtung 45 nach unten bewegt und stapeln sich auf der Standleiste 43 zu einer Stange. Sobald die Stange eine voreingestellte Länge erreicht hat, sperrt ein Zuteiler 46 die weitere Zufuhr von Bechern, die sich nun über dem Zuteiler stapeln, und der Zuteiler rückt jetzt aus der Flucht der Stange 47 in die Flucht der Stange 48 und gibt den Becheraustritt wieder frei, so daß sich die nächste Stange bildet und so fort, bis eine Lage aus vier Stangen 47, 48, 49, 50 gebildet ist.

Aufgrund der aus Figur 10 ersichtlichen Wölbung des Aufwölbers 41 ist die Lage 51 gewölbt wie im Text zu Figur 3 beschrieben und kann nun von dem Greifer 40 erfaßt werden. Der Greifer ist zu diesem Zweck schwenkbar und beweglich an einem beweglichen Greiferhalter 52 angeordnet, der seinerseits beweglich am Maschinengestell 53 gelagert ist. Der Greiferhalter schwenkt nun mit dem gefüllten Greifer 40 aus der in Figur 9 strichpunktiert gezeichneten Position in die in Figur 9 ausgezogen gezeichnete Position und senkt den Greifer in Schräglage gemäß dem Winkel 54, die der Schräglage gemäß Winkel 37 aus Figur 8 entspricht, in einen auf einer Fördervorrichtung 55 bereitgestellten, leeren Behälter 56 und legt die Lage 51 dort ab. Das wiederholt sich, bis der Behälter 56 gefüllt ist. Dann wird ein neuer Behälter 57 bereitgestellt und gefüllt und so fort. Die Behälter 56, 57 ... sind mit einer Kunststoff-Folie 58, 59 ausgekleidet, bestehen aus Pappe und sind quaderförmig mit enger Toleranz den Lagen aus den Becherstapeln angemessen.

Die Vorrichtung 64 kann auch zum Entleeren von Behältern eingesetzt werden. Dann wird in umgekehrter Weise wie bei der Beschickung des Behälters 56 ein an dessen Stelle stehender, voller Behälter entleert und der Inhalt in einen zum Beispiel in Förderrichtung dahinter auf der Fördervorrichtung abgestellten Behälter umgeladen in entsprechender Weise wie die Beladung des Behälters 56 anhand der Figuren 9 und 10 beschrieben wurde.

Bei dieser Vorrichtung werden die einzelnen Lagen unter Zuhilfenahme des Aufwölbers 41 gebildet. Statt dessen können die einzelnen Lagen auch unmittelbar im Greifer gebildet werden. Dann entfällt der Aufwölber 41 und der Greifer 63 steht dann beim Bilden der Lage nicht wie in Figur 9 und 10 gezeigt im Winkel 42 nach vorn geneigt, sondern mit einem entsprechenden kleinen spitzen Winkel 69 nach hinten geneigt zur Vertikalen 70, und der Stangenzuführer 44 ist entsprechend fluchtend auf diese geneigte Position des Greifers 63 ausgerichtet. Die dargestellte Vorrichtung läßt sich auf eine entsprechende Betriebsweise ohne Verwendung des Aufwölbers 41 umrüsten.

## Patentansprüche

1. Verfahren zum lagenweisen Versetzen von gleichgroßen Stangen, die kreiszylindrische Außenkontur haben, wobei mehrere Stangen achsparallel nebeneinander aufgereiht eine Lage bilden, welche durch einen Greifer (6) erfaßt wird, dadurch gekennzeichnet, daß eine Lage aufgewölbt an den äußeren Stangen (8, 11) erfaßt wird, wobei alle zwischen den beiden äußeren Stangen der Lage gelegenen Stangen (9, 10) auf der vorspringenden Vorderseite der Lage in Richtung des Stangenradius gegen weiteres Vorwölben abgestützt sind, und wobei die beiden äußeren Stangen in Richtung des Stangenradius gegeneinandergedrückt werden, so daß alle Stangen der Lage in Berührungskontakt miteinander stehen und sich dadurch gegenseitig stützen, wobei durch die Aufwölbung die innen gelegenen Stangen gegenüber den jeweils benachbarten, außen angrenzend liegenden Stangen um 10 bis 90 Prozent des Stangenradius aus der Ebene einer ungewölbten Lage achsparallel nach vorn verschoben sind.

2. Verfahren nach Anspruch 1, dadurch gekennzeichnet, daß eine Lage vier Stangen umfaßt.

3. Verfahren nach einem der Ansprüche 2 bis 5, 1 oder 2, dadurch gekennzeichnet, daß die Stangen (5) aus ineinandergesteckten, gleichartigen Kunststoffbehältern bestehen.

4. Vorrichtung zum lagenweisen Versetzen von gleichgroßen Stangen, die kreiszylindrische Außenkontur haben, wobei mehrere Stangen achsparallel nebeneinander aufgereiht eine Lage bilden, und zur Ausübung des Verfahrens nach einem der Ansprüche 1 bis 3, mit einem Greifer (6) zum lagenweisen Erfassen der Stangen, dadurch gekennzeichnet, daß der Greifer (6) einen Greifbügel (17) aufweist, der der vorspringenden Vorderseitenkontur einer aufgewölbten Lage tangential angeformt ist und mit seinen beiden Enden (19, 20) etwas über die den jeweiligen beiden nächstgelegenen Stangen (8, 9 und 10, 11) gemeinsame Mittelebene (21, 22) hinaus die beiden äußeren Stangen (8, 11) formschlüssig umgibt, und wobei bei einer aufgewölbten Lage die innen gelegenen Stangen (9, 10) über den jeweils benachbarten, außen angrenzend liegenden Stangen um 10 bis 90% des Stangenradius aus der Ebene (15) einer ungewölbten, achsparallelen Lage nach vorn verschoben sind.

5. Vorrichtung nach Anspruch 4, dadurch gekennzeichnet, daß der Greifbügel (11) zum Füllen mit seiner offenen Seite mindestens mit einer kleinen Komponente nach oben weisend haltbar ist, so daß die Stangenlage dann beim Einlegen in den Greifbügel aufgewölbt wird.

6. Vorrichtung nach Anspruch 4, dadurch gekennzeichnet, daß ein Aufwölber (12) vorgesehen ist, durch den eine zu ergreifende Lage aufgewölbt wird, indem der Aufwölber von der der vorspringenden Vorderseite gegenüberliegenden Rückseite auf diese Lage zur Einwirkung gebracht wird, und daß dann die aufgewölbte Lage von dem Greifer (17) erfaßt wird, wobei der Greifer von der Vorderseite der Lage zufaßt.

7. Vorrichtung nach einem der Ansprüche 4 bis 6, dadurch gekennzeichnet, daß für die Anwendung bei Stangen (5) aus ineinandergestapelten Kunststoffbechern (1), die sich zum Boden (2) hin konisch verjüngen und an ihrer Öffnung (3) von einem kragenförmig nach außen vorspringenden Rand (4) umgeben sind, am Greifer (6) für den Rand (60) des jeweils untersten Bechers (61) einer jeden Stange (5, 8–11) eine Stützschiene (62) vorgesehen ist.

8. Vorrichtung nach einem der vorhergehenden Ansprüche 4 bis 7, dadurch gekennzeichnet, daß zum Ausstoßen einer Lage (7) aus dem Greifer (6) ein Stößel (27) vorgesehen ist, so daß während der Greifer mit dieser Lage nach unten gehalten wird, eine der mittleren Stangen (10) durch den auf diese gerichteten Stößel (27) ausgestoßen wird, wodurch die anderen Stangen ihren Halt verlieren und ebenfalls abfallen.

9. Vorrichtung nach einem der Ansprüche 4 bis 6, dadurch gekennzeichnet, daß zum Ausstoßen einer Lage die beiden Enden (19, 20) des Greifers (6) gegeneinander verschieblich sind und zum Ausstoßen einer ergriffenen Lage, während der Greifer mit dieser Lage nach unten gehalten wird, auseinanderverstellt werden.

10. Vorrichtung nach einem der vorhergehenden Ansprüche 4 bis 9, dadurch gekennzeichnet, daß zum Füllen eines Behälters (31, 56) ein Lagenbildner (65) vorgesehen ist, der von einem Stangenzuführer (44) mit Stangen (47–50) beschickt wird, die nebeneinander zu einer Lage (51) aufgereiht werden, daß der Lagenbildner einen Aufwölber (41) aufweist, der als schräggeneigte Unterstützung für eine Lage ausgebildet ist.

11. Vorrichtung nach einem der vorhergehenden Ansprüche 4 bis 10, dadurch gekennzeichnet, daß zum Entleeren eines Behälters (31, 56) mit flexiblem Boden (34) ein Aufwölber (32) vorgesehen ist, der von unten an den Behälterboden angesetzt wird, wodurch sämtliche innerhalb des Behälters befindlichen Lagen aufgewölbt werden.

12. Vorrichtung nach einem der vorhergehenden Ansprüche 4 bis 11, dadurch gekennzeichnet, daß zum Füllen und/oder Entleeren eines Behälters (31, 56) ein beweglich gelagerter Greifer (63) vorgesehen ist, der bei bereitliegender, aufgewölbter Lage (51) auf diese angesetzt wird und dann mit der ergriffenen Lage über eine neue Ablageposition versetzt wird, wobei die Stangenlage (51) durch Absenken des Greifers in die richtige Höhenlage gebracht und dann von dem Greifer ausgestoßen wird, und wobei dann der leere Greifer zurückgezogen wird.

13. Vorrichtung nach Anspruch 12, dadurch gekennzeichnet, daß zur Gewinnung einer Toleranz in Längsrichtung der Stangen (8–11) beim Einführen einer Stangenlage (7) in einen Behälter (31) und/oder Herausnehmen einer Stangenlage aus dem Behälter der Greifer (6) im spitzen Winkel (37) zwischen der Längsachse der Stangen und der Ebene (36) der im Behälter abgelegten Lage einführbar beziehungsweise herausnehmbar ist.

**Claims**

1. Method of shifting equal-sized columns having a circular cylindrical contour in layers, a plurality of columns lined up side by side with their axes parallel forming a layer which is gripped by a grab (6), characterised in that a layer in an arched state is gripped at the outer columns (8, 11), all the columns (9, 10) located between the two outer columns of the layer on the projecting front of the layer being supported in the direction of the radius of the columns against further forward arching and the two outer columns being pressed towards one another in the direction of their radius, so that all the columns in the layer are in contact with one another and thereby mutually support themselves, the columns located on the inside being pushed forward with axes parallel with respect to the respectively neighbouring columns adjacent on the outside by 10 to 90 per cent of the column radius out of the plane of an unarched layer.

2. Method according to claim 1, characterised in that a layer comprises four columns.

3. Method according to claim 1 or 2, characterised in that the columns consist of like plastics containers inserted one into the other.

4. Apparatus for shifting equal-sized columns having a circular cylindrical contour in layers, a plurality of columns lined up side by side with their axes parallel forming a layer, and for carrying the method according to any one of claims 1 to 3 into effect, the apparatus having a grab (6) for gripping the columns in layers, characterised in that the grab (6) has a gripping yoke (17) which is shaped tangentially to the projecting contour of the front of an arched layer and embraces the two outer columns (8, 11) with its two ends (19, 20) in closely conforming relationship a little beyond the middle plane (21, 22) common to the particular two columns nearest to each other (8, 9 and 10, 11), and the columns located on the inside (9, 10) in an arched layer being pushed forward above the respectively neighbouring columns adjacent on the outside by 10 to 90% of the column radius out of the plane (15) of an unarched axis-parallel layer.

5. Apparatus according to claim 4, characterised in that for filling purposes the gripping yoke (17) can be held with its open side directed upwardly at least with a small component, so that when the layer of columns is placed in the gripping yoke it is then arched.

6. Apparatus according to claim 4, characterised in that an arching element (12) is provided by which a layer to be gripped is arched by the arching element being caused to act on this layer from the rear opposite the projecting front and the arched layer is then gripped by the grab (6), the grab setting to work from the front.

7. Apparatus according to any one of claims 4 to 6, characterised in that for application with columns (5) consisting of plastics cups (1) stacked one inside the other which taper conically towards the base (2) and are surrounded at their opening (3) by a rim (4) projecting outwardly in the form of a collar, a supporting rail (62) is provided on the grab (6) for the rim (60) of the lowest cup (61) of each column (5, 8–11).

8. Apparatus according to any one of the preceding claims 4 to 7, characterised in that a push rod (27) is provided for ejecting a layer (7) from the grab (6), so that while the grab is held with this layer facing downward, one of the intermediate columns (10) is ejected by the push rod (27) which is directed on to it, as a result of which the other columns lose their hold and likewise fall.

9. Apparatus according to any one of claims 4 to 6, characterised in that the two ends (19, 20) of the grab (6) are movable with respect to one another for ejecting a layer and are moved apart for efecting a gripped layer, while the grab is held with this layer facing downward.

10. Apparatus according to any one of the preceding claims 4 to 9, characterised in that a layer former (65) is provided for filling a container (31, 56), the layer former being loaded by a column feeder (44) with columns (47–50) which are lined up side by side to form a layer (51), and the layer former has an arching element (41) which is in the form of an obliquely inclined support for a layer.

11. Apparatus according to any one of the preceding claims 4 to 10, characterised in that an arching element (32) is provided for emptying a container (31, 56) with a flexible base (34), the arching element being applied against the base of the container from below, as a result of which all the layers located inside the container are arched upwardly.

12. Apparatus according to any one of the preceding claims 4 to 11, characterised in that a movably mounted grab (63) is provided for filling and/or emptying a container (31, 56) and, when an arched layer (51) is ready, is applied against it and then shifted above a fresh depositing position with the gripped layer, the layer of columns (51) being brought into the correct height position by lowering the grab and being then ejected from the grab and the empty grab being then retracted.

13. Apparatus according to claim 12, characterised in that for obtaining a tolerance in the longitudinal direction of the columns (8–11) when a layer of columns is introduced into a container (31) and/or a layer of columns is removed from the container, the grab (6) can be introduced or removed, respectively, at an acute angle (37) between the longitudinal axis of the columns and the plane (36) of the layer deposited in the container.

**Revendications**

1. Procédé pour déplacer par couches des perches uniformes dont le contour extérieur est un cylindre de révolution, plusieurs perches rangées les unes à côté des autres à axes parallèles formant une couche qui est saisie par un grappin (6), caractérisé par le fait qu'une couche en forme de voûte est saisie par les perches extérieures (8, 11), toutes les perches (9, 10) situées entre les deux perches extérieures de la couche étant en appui par la face avant en saillie de la couche, dans la direction du rayon des perches, pour éviter une voussure supplémentaire, et les deux perches extérieures étant serrées l'une vers l'autre dans la direction du rayon des perches, de sorte que toutes les perches de la couche sont en contact entre elles et s'appuient ainsi mutuellement, cependant que, du fait de la voussure, chaque perche située à l'intérieur est décalée vers l'avant, et à axes parallèles, par rapport à la perche voisine qui la délimite vers l'extérieur, ce décalage étant compris entre 10 et 90% du rayon des perches à partir du plan d'une couche non voûtée.

2. Procédé selon la revendication 1, caractérisé par le fait qu'une couche comprend quatre perches.

3. Procédé selon la revendication 1 ou 2, caractérisé par le fait que les perches (5) sont composées de gobelets en matière plastique similaires enfoncés les uns dans les autres.

4. Dispositif pour déplacer par couches des perches uniformes dont le contour extérieur est un cylindre de révolution, plusieurs perches rangées les unes à côté des autres à axes parallèles formant une couche, et pour la mise en œuvre du procédé selon l'une des revendications 1 à 3, avec un grappin (6) pour saisir les perches par couches, caractérisé par le fait que le grappin (6) comporte un étrier de préhension (17) sur lequel se forme tangentiellement le contour en saillie du côté avant d'une couche voûtée, et qui, par ses deux extrémités (19, 20), enserre positivement les deux perches extérieures (8, 11), un peu au-delà du plan moyen (21, 22) qui est commun à chaque paire de perches voisines (8, 9 et 10, 11), et chaque perche (9, 10) située vers l'intérieur d'une couche en forme de voûte étant décalée vers l'avant par rapport à la perche voisine qui la délimite vers l'extérieur, ce décalage étant compris entre 10 et 90% du rayon des perches à partir du plan (15) d'une couche non voûtée à axes parallèles.

5. Dispositif selon la revendication 4, caractérisé par le fait que l'étrier de préhension (11), pour son remplissage, est maintenu avec son côté ouvert dirigé vers le haut au moins par un petit élément, de sorte que la couche de perches peut prendre la forme d'une voûte lorsqu'on les dépose dans l'étrier de préhension.

6. Dispositif selon la revendication 4, caractérisé par le fait qu'il est prévu un dispositif (12) qui est destiné à donner une forme de voûte à une couche à saisir et qui est amené à agir sur cette couche à partir de sa face arrière opposée à sa face avant en saillie, et par le fait que la couche en forme de voûte est alors saisie par le grappin (17), ce grappin agissant à partir de la face avant de la couche.

7. Dispositif selon l'une des revendications 4 à 6, caractérisé par le fait qu'en vue de son utilisation pour des perches (5) composées de gobelets en matière plastique (1) qui sont empilés les uns dans les autres, qui se rétrécissent en tronc de cône dans la direction de leur fond (2), et qui sont entourés sur leur ouverture (3) par un bord (4) en forme de collet faisant saillie vers l'extérieur, le grappin (6) comporte un rail d'appui (62) pour le bord (60) de chaque gobelet inférieur (61) de chaque perche (5, 8 à 11).

8. Dispositif selon l'une des revendications précédentes 4 à 7, caractérisé par le fait que, pour éjecter une couche (7) du grappin (6), il est prévu un poussoir (27), de sorte que, pendant que le grappin est maintenu avec cette couche vers le bas, l'une des perches du milieu (10) est éjectée par le poussoir (27) qui est dirigé vers elle, grâce à quoi les autres perches perdent leur appui et tombent également.

9. Dispositif selon l'une des revendications 4 à 6, caractérisé par le fait que, pour éjecter une couche, les deux extrémités (19, 20) du grappin (6) peuvent être déplacées l'une par rapport à l'autre et que, pour éjecter une couche qui a été saisie, on les écarte l'une de l'autre, cependant que le grappin est maintenu avec cette couche vers le bas.

10. Dispositif selon l'une des revendications précédentes 4 à 9, caractérisé par le fait que, pour remplissage d'un conteneur (31, 56), il est prévu un dispositif (65) pour la formation de couches qui est alimenté en perches (47 à 50) par un dispositif (44) d'amenée des perches, celles-ci étant rangées les unes à côté des autres en une couche (51), et par le fait que le dispositif pour la formation de couches comporte un dispositif (41) destiné à la formation de voûtes qui est réalisé sous la forme d'un support incliné pour une couche.

11. Dispositif selon l'une des revendications précédentes 4 à 10, caractérisé par le fait que, pour vider un conteneur (31, 56) à fond flexible (34), il est prévu un dispositif (32) pour la fomation d'une voûte qui est appliqué par-dessous sur le fond du conteneur, grâce à quoi toutes les couches qui se trouvent à l'intérieur du conteneur prennent la forme d'une voûte.

12. Dispositif selon l'une des revendications précédentes 4 à 11, caractérisé par le fait que, pour remplir et/ou vider un conteneur (31, 56), il est prévu un grappin monté mobile (63) qui, lorsqu'une couche (51) est prêt et en forme de voûte, est posé sur celle-ci, puis déplacé avec la couche saisie jusqu'au-dessus d'une nouvelle position de dépose, la couche de perches (51) étant amenée dans sa position correcte en hauteur par descente du grappin, puis éjectée du grappin, et le grappin vide étant alors retiré.

13. Dispositif selon la revendication 12, caractérisé par le fait que, pour obtenir une tolérance dans la direction longitudinale des perches (8 à 11) lors de l'introduction d'une couche de perches (7) dans un conteneur (31) et/ou lorsqu'on retire une couche de perches du conteneur, le grappin (6) peut être introduit ou, respectivement, retiré de telle façon que l'axe longitudinal des perches fasse un angle aigu (37) avec le plan (36) de la couche qui se trouve dans le conteneur.

Fig.1

Fig.2

Fig.3

Fig.4

EP 0 224 678 B1

Fig.5

Fig.6

Fig.7

Fig.8

**Fig. 9**

**Fig. 10**